# EUROPEAN PATENT SPECIFICATION

(11) **EP 4 310 333 B1**
(45) Date of publication and mention of the grant of the patent: **18.02.2026**
(21) Application number: 23197658.0
(22) Date of filing: 15.09.2023
(51) Int. Cl.: F04C 18/02, F04C 23/00

(54) **ROTARY SHAFT SUPPORT ASSEMBLY AND SCROLL COMPRESSOR**
DREHWELLENSTÜTZANORDNUNG UND SPIRALVERDICHTER
ENSEMBLE DE SUPPORT D'ARBRE ROTATIF ET COMPRESSEUR À SPIRALES

(30) Priority: 18.07.2022 CN 202210840705; 18.07.2022 CN 202221993945 U
(43) Date of publication of application: 24.01.2024
(73) Proprietor: Copeland Climate Technologies (Suzhou) Co., Ltd., Suzhou, Jiangsu 215021 (CN)
(72) Inventor: MIAO, Zhongwei, Suzhou, Jiangsu, 215021 (CN); SHI, Keming, Suzhou, Jiangsu, 215021 (CN)
(74) Representative: Bryn-Jacobsen, Caelia

(56) References cited:
- US-A- 4 992 033
- US-A- 6 139 294
- US-A1- 2015 275 898
- US-A1- 2017 097 048

## Description

### FIELD

The present application relates to a rotary shaft support assembly and a compressor. More specifically, the present application relates to a rotary shaft support assembly for supporting a rotary shaft in a compressor, and a compressor including the rotary shaft support assembly. Such devices are known from US2015/275898 A1 and US4992033 A.

### BACKGROUND

The contents of this part provide only background information relevant to the present application, which may not constitute the prior art.

In a compressor, in general, support structures are respectively provided at an upper end and a lower end of a rotary shaft to provide support for the rotary shaft. The support structure provided at the lower end of the rotary shaft may support a shoulder, closer to the lower end, of the rotary shaft. The shoulder of the rotary shaft is supported on a support seat of the support structure through a thrust plate. A shaft end of the rotary shaft is rotatably inserted into an orifice of the support structure. In conventional designs, the thrust plate is usually made of a hard material and is usually fixedly mounted on the support seat through a fastening structure such as a bolt or a pin. However, once the position of a mounting hole on the thrust plate do not fit with the position of a mounting hole on the support seat due to manufacturing errors or other reasons, the non-elastic deformation of the thrust plate is likely to be caused during the process of fixing the thrust plate to the support seat, for example, the thrust plate of hard material will be warped, which will destroy the surface flatness. Furthermore, over-positioning of the thrust plate by the bolt or the pin is likely to cause non-elastic deformation of the thrust plate. The non-elastic deformation of the thrust plate reduces the contact area between the thrust plate and the shoulder of the rotary shaft, and causes the thrust plate and the support seat unable to be fitted with each other well, and thus a well support cannot be achieved and noise is easily generated. In addition, during operation of the compressor, wear is easily generated between the rotary shaft and the thrust plate. When the rotary shaft tilts during rotation, a concentration of stress easily occurs on the thrust plate.

Therefore, it is desired to improve the support structure of the rotary shaft to provide stable support, reduce wear, and reduce noise.

A compressor includes a shell, and a compression mechanism disposed in the shell including a first scroll member having a first spiral wrap and a second scroll member having a second spiral wrap intermeshed with the first spiral wrap. A drive shaft has a first end engaged with the first scroll member for moving the first scroll member relative to the second scroll member, and a bearing assembly including a bearing housing rotatably supports a second end of the drive shaft. A base is secured to the shell, and a mounting feature formed on either the bearing assembly or the base orients the bearing assembly relative to the base.

There is disclosed a scroll-type machine particularly suited for use as a refrigerant compressor and incorporating Oldham coupling utilizing a novel ring element which is noncircular and provides for increased thrust-bearing size, or reduced machine size.

A scroll compressor having a suction pressure chamber into which fluid is received substantially at suction pressure and a discharge pressure chamber from which the fluid is discharged substantially at discharge pressure, including a first scroll member having a first involute wrap element project-ing from a first substantially planar surface, a second scroll member having a second involute wrap element projecting from a second substantially planar surface, and third and fourth surfaces opposite the second substantially planar surface, the third and fourth surfaces respectively located in first and second planes which are spaced apart from each other and substantially parallel with the second substantially planar surface. The first and second scroll members are mutually engaged with the first involute wrap element projecting towards the second surface and the second invo-lute wrap element projecting towards the first surface, the first surface positioned substantially parallel with the second surface whereby relative orbiting of the scroll members compresses fluids between the involute wrap elements. The engaged scroll members are in fluid communication with the suction and discharge chambers. A frame is provided having fifth and sixth surface located in different planes substantially parallel with the second substantially planar surface of the second scroll member, the fifth surface adjacent and opposed to the third surface of the second scroll member, and a sixth surface adjacent and opposed to the fourth surface of the second scroll member. A first seal is disposed between the third and fifth surfaces, the first seal in sliding engagement with one of the third and the fifth surfaces. A second seal is disposed between the fourth and sixth surfaces, the second seal in sliding engagement with one of the fourth and the sixth surfaces. An intermediate pressure chamber is in part bounded by the third and fourth surfaces of the second scroll member, the fifth and sixth surfaces of the frame, and the first and second seals, and is in fluid communication with a source of pressure intermediate suction and discharge pressures, whereby the first and second scroll members are at least partially urged into axial sealing engagement by forces induced by fluid pressure in the intermediate pressure chamber.

### SUMMARY

The present invention is set out in the independent claims with some optional features set out in the claims dependent thereto.

An object of the present application is to solve at least one of the above problems.

A rotary shaft support assembly is provided according to an aspect of the present application. The rotary shaft support assembly includes: a support seat, which is provided with an orifice; and a thrust plate, which is supported on the support seat so that a through-hole of the thrust plate is axially aligned with the orifice of the support seat. The thrust plate is floatable in an axial direction relative to the support seat.

Further, the thrust plate is supported in an accommodating region of the support seat through a support projection, so that a part, located radially outside the support projection, of the thrust plate is suspended.

In an embodiment, the support projection is integrally formed on an axial end surface of the accommodating region.

In an embodiment, the support projection is integrally formed on the thrust plate.

In an embodiment, a support recess is formed in the accommodating region, and the support recess is recessed in an axial direction from an axial end surface of the accommodating region. The support projection is a support ring, and the support ring is mounted in the support recess.

In an embodiment, the rotary shaft support assembly further includes a bearing, the orifice of the support seat is a through-hole, and the bearing is mounted in the through-hole of the support seat.

In an embodiment, the rotary shaft support assembly further includes an anti-release member, and the anti-release member is mounted on the support seat, so that a part of the anti-release member is located directly above the thrust plate and axially spaced apart from the thrust plate.

In an embodiment, the anti-release member includes a head portion and a rod portion formed integrally, and the rod portion is detachably mounted to the support seat, so that a part of the head portion is located directly above the thrust plate and axially spaced apart from the thrust plate.

In an embodiment, the anti-release member includes a screw and a spacer, the screw is screwed to the support seat, the spacer is sandwiched between a head of the screw and the support seat, and a part of the spacer is located directly above the thrust plate and axially spaced apart from the thrust plate.

In an embodiment, the accommodating region is an accommodating recess recessed relative to an axial end surface of the support seat, and a mounting slot is formed on a circumferential sidewall of the accommodating recess. The anti-release member includes an anti-release ring, and the anti-release ring is detachably mounted to the mounting slot, so that a part of the anti-release ring is located directly above the thrust plate and axially spaced apart from the thrust plate.

In an embodiment, the thrust plate is elastically deformable relative to the support seat.

A compressor is provided according to another aspect of the present application. The compressor includes: a compression mechanism, including a non-orbiting scroll and an orbiting scroll; and a drive mechanism, where a rotating shaft of the drive mechanism is configured to drive the orbiting scroll. The compressor further includes the rotary shaft support assembly according to the present application. A shoulder at a lower end of the rotary shaft is supported on the thrust plate of the rotary shaft support assembly, and a radial outer edge of a region in which the shoulder contacts with the thrust plate is located radially outside the support projection.

An improved rotary shaft support assembly and compressor are provided according to the present application. In the rotary shaft support assembly and the compressor according to the present application, the rotary shaft can be stably supported during operation of the compressor, and the distribution of stress on the thrust plate of the rotary shaft support assembly can be improved, thereby avoiding the concentration of stress, reducing wear, and reducing noise.

### BRIEF DESCRIPTION OF THE DRAWINGS

Embodiments of the present application will be described below only by way of example with reference to the accompanying drawings. In the accompanying drawings, the same features or components are represented by the same reference numerals, and the accompanying drawings are not necessarily drawn to scale and in the accompanying drawings:
Fig. 1 shows a longitudinal cross-sectional view of a compressor according to a first embodiment of the present application;
Fig. 2 shows a plan view of a rotary shaft support assembly at a bottom of the compressor as shown in Fig. 1;
Fig. 3 shows a partially enlarged view of a structure in rectangle frame I of Fig. 1;
Fig. 4 shows a partially enlarged view of the structure in Fig. 3;
Figs. 5 and 6 are cross-sectional views similar to Fig. 3 and illustrate the process of the tilting of a rotating shaft during the rotation;
Fig. 7 shows a cross-sectional view taken along the cross-sectional line B-B of Fig. 2;
Fig. 8 shows a partially enlarged view of the cross-sectional view of Fig. 7;
Fig. 9 shows a cross-sectional view of a rotary shaft support assembly of a compressor according to a second embodiment of the present application;
Fig. 10 shows a partially enlarged view of the cross-sectional view of Fig. 9;
Fig. 11 shows a three-dimensional view of a thrust plate of the rotary shaft support assembly as shown in Fig. 9;
Fig. 12 shows a cross-sectional view of a rotary shaft support assembly of a compressor according to a third embodiment of the present application;
Fig. 13 shows a three-dimensional view of a support seat of the rotary shaft support assembly as shown in Fig. 12;
Fig. 14 shows a three-dimensional view of a support ring of the rotary shaft support assembly as shown in Fig. 12;
Fig. 15 shows a cross-sectional view of a rotary shaft support assembly of a compressor according to a fourth embodiment of the present application;
Fig. 16 shows a cross-sectional view of a rotary shaft support assembly of a compressor according to a modified embodiment of the present application;
Fig. 17 shows a cross-sectional view of a rotary shaft support assembly of a compressor according to another modified embodiment of the present application;
Fig. 18 shows a three-dimensional view of a support seat of the rotary shaft support assembly as shown in Fig. 17; and
Fig. 19 shows a three-dimensional view of an anti-release ring of the rotary shaft support assembly as shown in Fig. 17.

### DETAILED DESCRIPTION OF THE EMBODIMENTS

The following description is essentially exemplary only, rather than intended to limit the present application and the application or usage thereof. It should be appreciated that, throughout all the drawings, the same or similar parts or features are indicated by similar reference numerals. Each of the drawings only illustratively shows the concept and principle of the embodiments of the present application, and does not necessarily show the specific dimensions and scales of various embodiments of the present application. Specific parts in specific drawings may be exaggerated to illustrate related details or structures of various embodiments of the present application.

In the description of the embodiments of the present application, the orientation terms related to "upper", "lower", "left", and "right" used herein are described according to the upper, lower, left and right position relationships of the views shown in the accompanying drawings. In practical applications, the positional relationships of "upper", "lower", "left" and "right" used herein may be defined according to practical conditions. These relationships may be reversed.

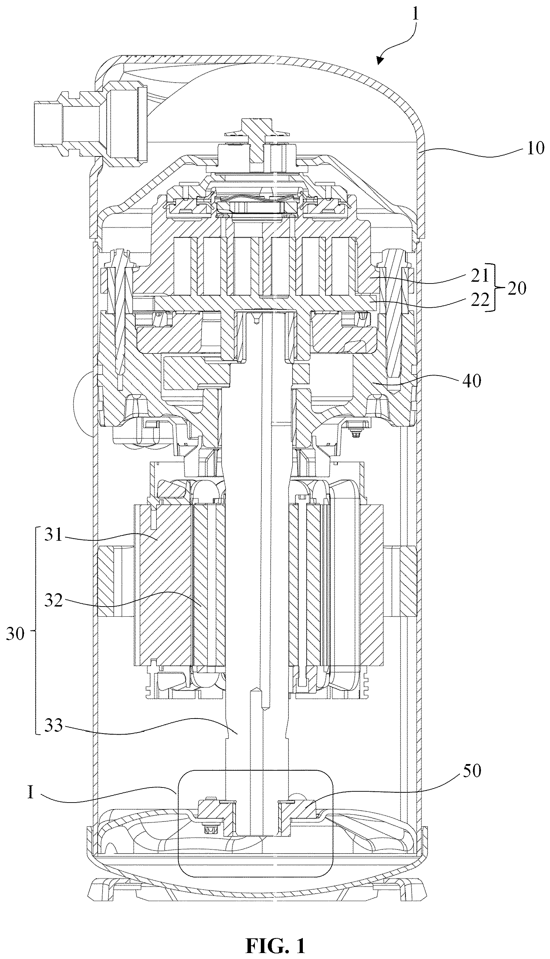

Figs. 1 to 8 show a compressor according to a first embodiment of the present application. In the example shown in the figures, the compressor 1 is a scroll compressor. As shown in Fig. 1, the compressor 1 includes a housing 10, and a compression mechanism 20, a drive mechanism 30, a main support frame assembly 40, and a rotary shaft support assembly 50, which are accommodated in the housing 10. The compression mechanism 20 includes a non-orbiting scroll 21 and an orbiting scroll 22. During operation of the compressor 1, a scroll of the orbiting scroll 22 and a scroll of the non-orbiting scroll 21 engage with each other and form a series of compression chambers therebetween. The orbiting scroll 22 is supported on the main support frame assembly 40. The drive mechanism 30 includes a stator 31, a rotor 32, and a rotary shaft 33. The rotary shaft 33 rotates integrally with the rotor to transfer power to the orbiting scroll 22 of the compression mechanism 20, thereby driving the orbiting scroll 22. An upper end of the rotary shaft 33 is supported by a bearing assembly (not labeled out in Fig. 1) arranged in the main support frame assembly 40, and a lower end of the rotary shaft 33 is supported by the rotary shaft support assembly 50.

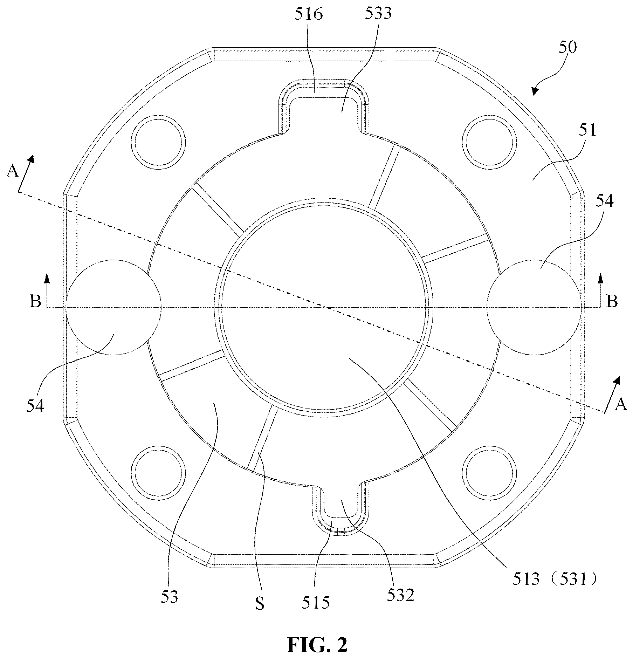

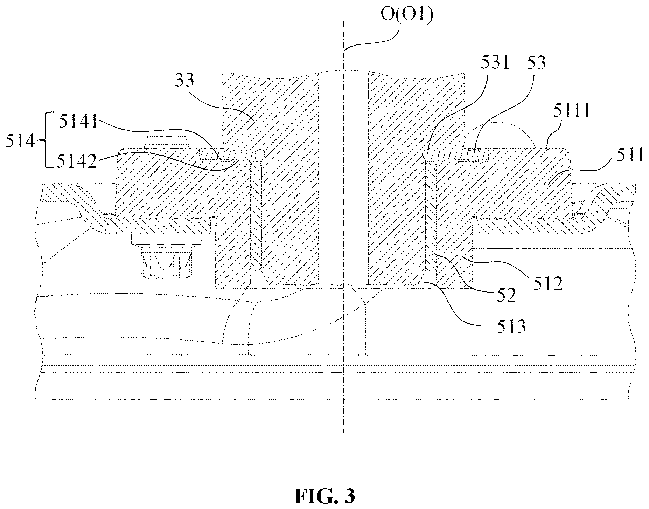

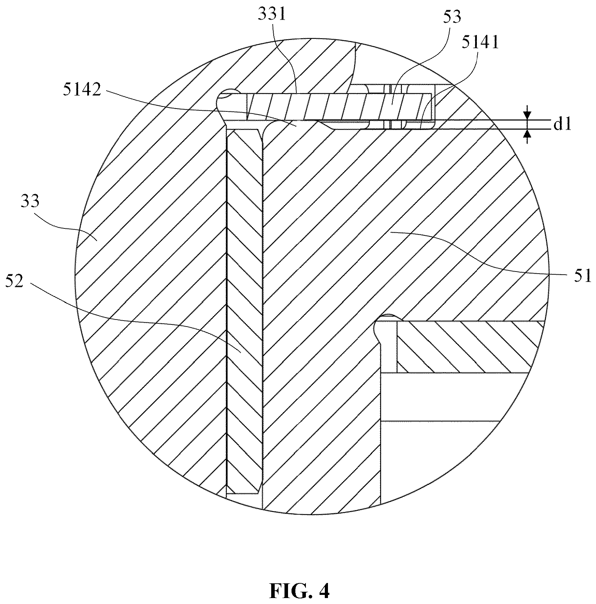

Fig. 2 shows a plan view of the rotary shaft support assembly 50. Fig. 3 is a partially enlarged view of a structure in rectangle frame I of Fig. 1, and illustrates a cross-sectional view of the rotary shaft support assembly 50 corresponding to a cross-sectional line A-A in Fig. 2. Fig. 4 is a partially enlarged view of the structure of Fig. 3.

As shown in Fig. 2 to Fig. 4, the rotary shaft support assembly 50 includes a support seat 51 and a thrust plate 53 mounted on the support seat 51. The support seat 51 includes a flange portion 511 and a hub portion 512 extending axially from a side surface of the flange portion 511. An orifice 513 is provided in the center of the support seat 51 for accommodating a shaft end of the rotary shaft 33. In an embodiment, as shown in the figures, the orifice 513 is a through hole extending through the flange portion 511 and the hub portion 512.

The thrust plate 53 is an annular plate with a through hole 531 provided in the center of the plate. The thrust plate 53 is a thin sheet metal sheet with elasticity. However, the present application is not limited to this, and in other examples according to the present application, the thrust plate 53 may be made of other suitable materials such that the thrust plate 53 is elastic while satisfying the stiffness requirement. When the thrust plate 53 is mounted in place on the support seat 51, the through-hole 531 of the thrust plate 53 is axially aligned with the orifice 513 of the support seat 51. The thrust plate 53 is supported in an accommodating region of the support seat 51 through a support projection, such that a part, located radially outside the support projection, of the thrust plate 53 is suspended, and an axial clearance is formed between the suspended part of the thrust plate 53 and an axial end surface, facing the suspended part, of the accommodating region of the support seat 51. The accommodating region of the support seat 51 is a region on the support seat 51 where the thrust plate 53 is arranged. The suspended part of the thrust plate 53 is deformable at a certain degree when subjected to a force, so that the thrust plate 53 is elastic, which can reduce wear on the thrust plate 53 and avoid the concentration of stress. Moreover, the thrust plate 53 is not fixed to the support seat 51, and the thrust plate 53 is movable or floatable in a certain range in the axial direction relative to the support seat 51, thereby avoiding non-elastic deformation caused by over-positioning of the thrust plate when the thrust plate is fixed to the support seat in the related technology. In addition, since the thrust plate 53 is a thin sheet metal sheet having elasticity, when the thrust plate 53 is subjected to a force, the thrust plate 53 can elastically deform in a certain range due to the elasticity of the thrust plate 53, thereby improving the contact stress of the thrust plate 53.

In the example shown in the figures, the accommodating region of the support seat 51 is an accommodating recess 514 recessed in an axial direction relative to an axial end surface 5111 of the flange portion 511 of the support seat 51, and the thrust plate 53 is accommodated in the accommodating recess 514. The axial end surface of the accommodating region is a bottom surface 5141 of the accommodating recess 514. However, the present application is not limited thereto, and in other examples according to the present application, the accommodating region may be flush with the axial end surface 5111 of the flange portion 511 or project axially from the axial end surface 5111 of the flange portion 511.

As shown in Fig. 3, and optimally as shown in Fig. 4, a support projection 5142 is integrally formed on the bottom surface 5141 of the accommodating recess 514. The support projection 5142 surrounds around the orifice 513 and is located on a radial inner portion of the bottom surface 5141 of the accommodating recess 514. In an embodiment, the support projection 5142 has a flat upper surface. The thrust plate 53 is supported in the accommodating recess 514 through the support projection 5142. An axial clearance d1 is formed between the suspended part of the thrust plate 53 and the bottom surface 5141 of the accommodating recess 514 facing towards the suspended part.

With the above arrangement, when the suspended part of the thrust plate 53 is subjected to a downward force on one side, the thrust plate 53 is tilted in a certain degrees under the force.

In Figs. 3 and 4, a shaft end of the rotary shaft 33 is supported by the rotary shaft support assembly 50, the rotary shaft 33 is not tilted, and the center axis O1 of the rotary shaft 33 coincides with the center axis O of the rotary shaft support assembly 50. A shoulder 331 of the rotary shaft 33 is supported on the thrust plate 53. A radial outer edge of a region in which the shoulder 331 contacts with the thrust plate 53 is located radially outside the support projection 5142. The shoulder 331 has a flat end surface, and in a state where the rotary shaft 33 is not tilted, the shoulder 331 is in face contact with an upper surface of the thrust plate 53. In this case, the region in which the shoulder 331 contacts with the thrust plate 53 is an annular region, and an outer diameter of the region in which the shoulder 331 contacts with the thrust plate 53 is greater than an outer diameter of the support projection 5142. The outer diameter of the contact region is the outer diameter of the shoulder 331.

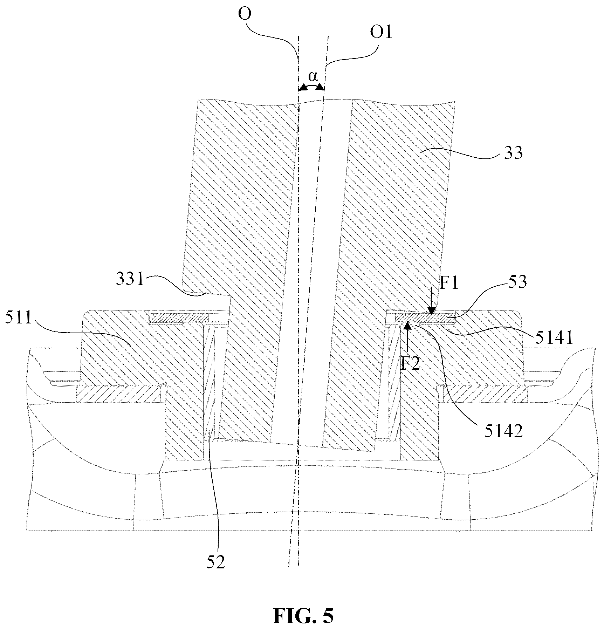

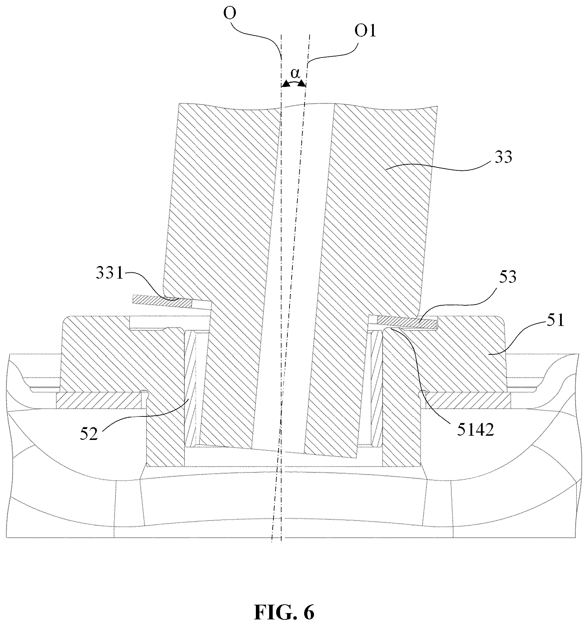

Figs. 5 and 6 are views similar to Fig. 3, and illustrate the process of the tilting of the rotary shaft 33 during rotation during operation of the compressor 1. As shown in Fig. 5, the rotary shaft 33 tilts, and an included angle α is formed between the central axis O1 of the rotary shaft 33 and the central axis O of the rotary shaft support assembly 50. The outer peripheral edge of the shoulder 331 of the rotary shaft 33 applies a downward force F1 on the suspended part of the thrust plate 53. The thrust plate 53 is supported on the support projection 5142, and the support projection 5142 applies an upward force F2 on the thrust plate 53, as shown in Fig. 5. Since the part, located radially outside the support projection 5142, of the thrust plate 53 is suspended and the thrust plate 53 is not fixed axially to the support seat 51, when the downward force F1 acts on the suspended part of the thrust plate 53, the thrust plate 53 tilts so as to come into contact with the face of the shoulder 331 of the rotating shaft 33, as shown in Fig. 6.

Since the rotary shaft support assembly 50 can tilt as the rotary shaft 33 tilts, so that even if the rotary shaft 33 is tilted during rotation, the shoulder 331 of the rotary shaft 33 still forms face contact with the upper surface of the thrust plate 53, increasing the contact area between the shoulder 331 and the thrust plate 53, providing stable support, and improving the distribution of stress on the thrust plate 53, avoiding the concentration of stress, reducing wear, and reducing noise.

In the example shown in the figures, the rotary shaft support assembly 50 further includes a bearing 52. As shown in Fig. 3 to Fig. 6, the bearing 52 is provided in the orifice 513 of the support seat 51, and a shaft end of the rotary shaft 33 is accommodated in the bearing 52. However, it is to be noted that the bearing 52 is not necessarily provided. In other examples according to the present application, the rotary shaft support assembly 50 may be provided without the bearing 52, and the shaft end of the rotary shaft 33 is accommodated directly in the orifice 513 of the support seat 51.

During operation of the compressor 1, the thrust plate 53 does not rotate relative to the support seat 51 with the rotation of the rotating shaft 33. For this reason, an anti-rotation structure is usually provided in the support seat 51 and the thrust plate 53. In this example, the anti-rotation structure is implemented as a latch and groove structure including an anti-rotation latch 532 and an anti-rotation latch 533 provided on the thrust plate 53, and an anti-rotation groove 515 and an anti-rotation groove 516 provided on a circumferential side wall of the accommodating recess 514 of the support seat 51, as shown in Fig. 2. The anti-rotation latch 532 and the anti-rotation latch 533 adopt an asymmetrical fool-proof design, so as to prevent jamming from occurring. However, it should be noted that the anti-rotation structure is not limited to the latch and groove structure shown in the figures, but may be implemented as any suitable other structure.

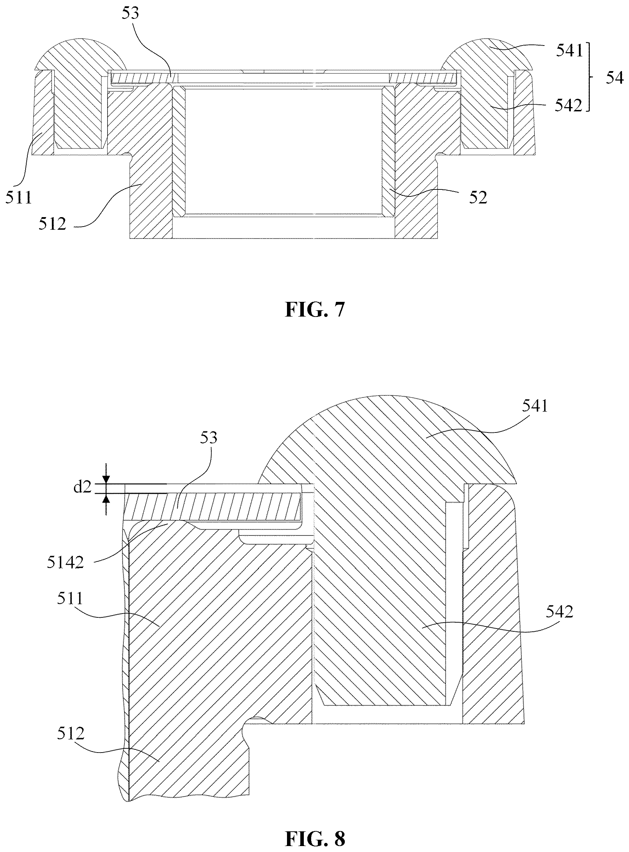

As described above, the thrust plate 53 is not fixed to the support seat 51 and is movable or floatable in the axial direction. In order to prevent the thrust plate 53 from falling off from the support seat 51 during assembly, an anti-release member is provided. In this example, the anti-release member is implemented as two anti-release members 54 symmetrically mounted to the support seat 51 with each other, as shown in Fig. 2. The anti-release members 54 are screws or rivets and each include a head portion 541 and a rod portion 542. The rod portion 542 may be a threaded rod. Fig. 7 shows a cross-sectional view of the rotary shaft support assembly 50 taken along the cross-sectional line B-B in Fig. 2. Fig. 8 shows a partially enlarged view of the cross-sectional view of Fig. 7. As shown in Figs. 7 and 8, the rod portion 542 of the anti-release member 54 is detachably mounted to the flange portion 511 of the support seat 51. A part of the head portion 541 of the anti-release member 54 is located directly above the thrust plate 53 and axially spaced apart from the thrust tab 53. An axial clearance d2 exists between the head portion 541 of the anti-release member 54 and the upper surface of the thrust plate 53. As a result, the anti-release member 54 can prevent the thrust plate 53 from falling off from the support seat 51, and the thrust plate 53 is still allowed to move axially within a certain range relative to the support seat 51. After the rotary shaft support assembly 50 is mounted in position in the compressor 1, the anti-release member 54 can be removed.

Further, in the example shown in the figures, multiple oil grooves S is provided on an upper surface of the thrust plate 53, as shown in Fig. 2. In Fig.2, six oil grooves spaced apart from each other are provided on the upper surface of the thrust plate 53. However, the present application is not limited thereto. In other examples according to the present application, the number of the oil grooves may be less or more, or the oil grooves S may not be provided.

The compressor 1 and the rotary shaft support assembly 50 thereof according to a first embodiment of the present application are described above. The rotary shaft support assembly 50 according to the first embodiment of the present application can provide stable support during operation of the compressor 1, and can improve the distribution of stress on the thrust plate 53, avoiding the concentration of stress, reducing wear, and reducing noise.

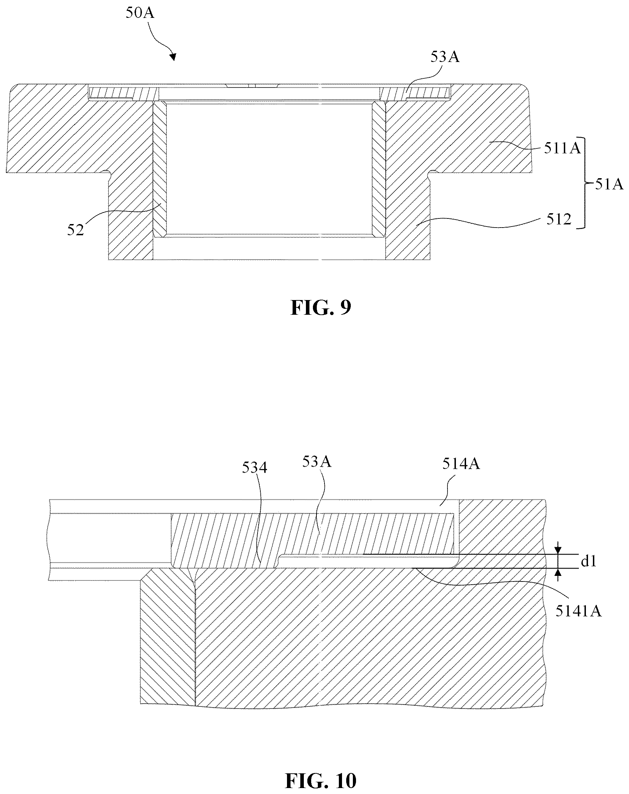

Figs. 9 to 11 show a rotary shaft support assembly 50A of a compressor according to a second embodiment of the present application. The construction of the compressor according to the second embodiment of the present application is substantially the same as the construction of the compressor according to the first embodiment of the present application, and the difference only lies in the arrangement of a support projection in the rotary shaft support assembly. In the accompanying drawings, parts identical to those in the rotary shaft support assembly 50 are indicated by the same reference numerals and are not described repeatedly. Only the differences between the rotary shaft support assembly 50A and the rotary shaft support assembly 50 are described hereinafter.

Fig. 9 shows a cross-sectional view of the rotary shaft support assembly 50A. The rotary shaft support assembly 50A has an outer contour similar to that of the rotary shaft support assembly 50 according to the first embodiment and has the plan view as shown in Fig. 2. Fig. 9 is a cross-sectional view of the rotary shaft support assembly 50A taken along a cross-sectional line corresponding to the cross-sectional line A-A in Fig. 2. Fig. 10 is a partially enlarged view of the cross-sectional view of Fig. 9.

As shown in Figs. 9 and 10, the rotary shaft support assembly 50A includes a support seat 51A and a thrust plate 53A. The thrust plate 53A is supported in an accommodating recess 514A of the support seat 51A through a support projection 534. A bottom surface 5141A of the accommodating recess 514A is formed as a flat surface, and the support projection 534 is formed on a lower surface of the thrust plate 53A, as optimally shown in Fig. 10.

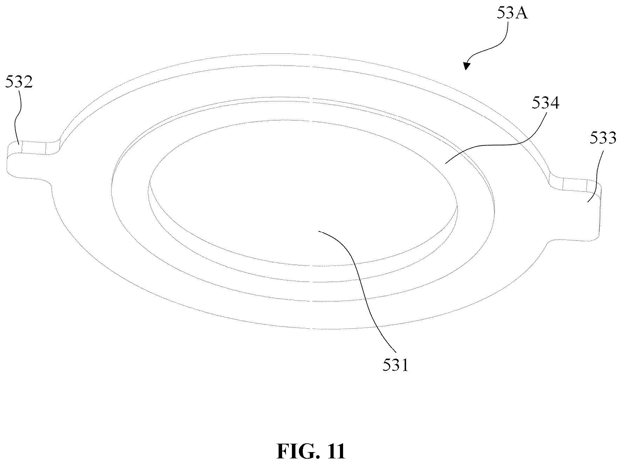

Fig. 11 shows a three-dimensional view of the thrust plate 53A. As shown in Fig. 11, the support projection 534 is integrally formed on the lower surface of the thrust plate 53A. When the thrust plate 53A is mounted in place on the support seat 51A, the thrust plate 53A is supported in the accommodating recess 514 through the support projection 534 and in face contact with the bottom surface 5141A, and a part, located radially outside the support projection 534, of the thrust plate 53A is suspended. An axial clearance d1 exists between the suspended part of the thrust plate 53A and the bottom surface 5141A facing the suspended part. Therefore, when a downward force acts on one side of the suspended part of the thrust plate 53A, the thrust plate 53A is tilted in a certain degrees under the force.

The rotary shaft support assembly 50A according to the second embodiment of the present application is capable of achieving the advantageous technical effects similar to those described above for the rotary shaft support assembly 50 according to the first embodiment.

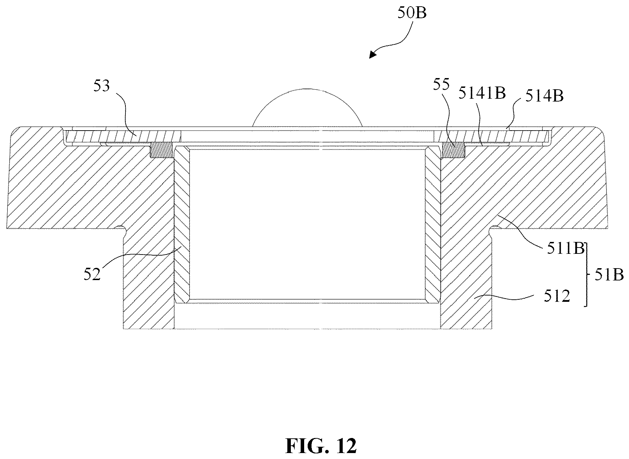

Figs. 12 to 14 show a rotary shaft support assembly 50B of a compressor according to a third embodiment of the present application. The construction of the compressor according to the third embodiment of the present application is substantially the same as the construction of the compressors according to the first embodiment and the second embodiment of the present application, and the difference only lies in the arrangement of a support projection in the rotary shaft support assembly. In the accompanying drawings, parts identical to those in the rotary shaft support assembly 50 and the rotary shaft support assembly 50A are indicated by the same reference numerals and are not described repeatedly. Only the differences between the rotary shaft support assembly 50B and the rotary shaft support assembly 50 or the rotary shaft support assembly 50A are described hereinafter.

Fig. 12 shows a cross-sectional view of the rotary shaft support assembly 50B. The rotary shaft support assembly 50B has an outer contour similar to that of the rotary shaft support assembly 50 according to the first embodiment, and has the plan view as shown in Fig. 2. Fig. 12 is a cross-sectional view of the rotary shaft support assembly 50B taken along a cross-sectional line corresponding to the cross-sectional line A-A in Fig. 2.

As shown in Fig. 12, the rotary shaft support assembly 50B includes a support seat 51B and a thrust plate 53. The thrust plate 53 of the rotary shaft support assembly 50B is the same as the thrust plate 53 of the rotary shaft support assembly 50. The thrust plate 53 is accommodated in an accommodating recess 514B of the support seat 51B. In the rotary shaft support assembly 50B, the thrust plate 53 is supported in the accommodating recess 514B of the support seat 51B through a support projection 55.

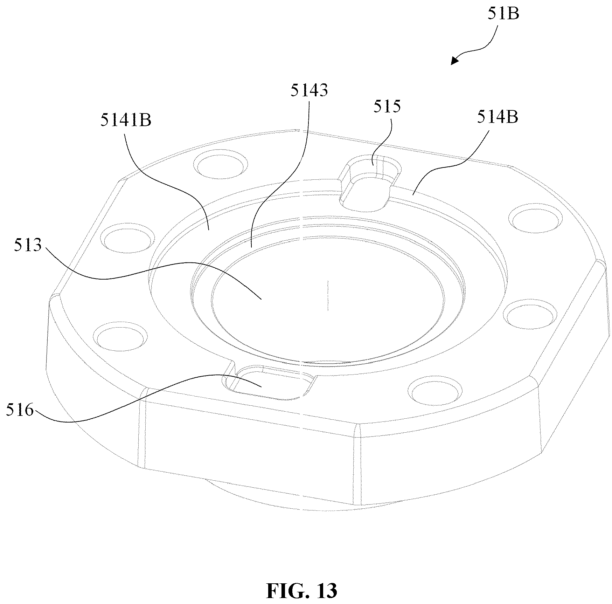

Fig. 13 shows a three-dimensional view of the support seat 51B. As shown in Fig. 13, a radial inner part of a bottom surface 5141B of the accommodating recess 514B is recessed in an axial direction to form a support recess 5143.

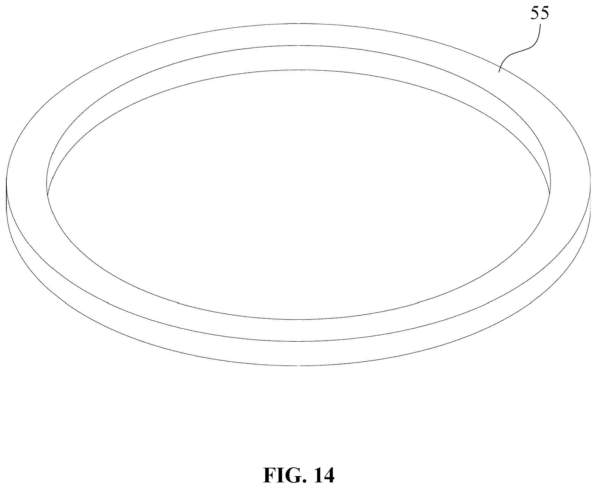

The support projection 55 is a component formed separately from the support seat 51B and the thrust plate 53. In this example, the support projection 55 is a rigid support ring. Fig. 14 shows a three-dimensional view of the support projection 55. In the example as shown, the rigid support projection 55 has a rectangle cross-section. However the present application is not limited thereto. In other examples according to the present application, the rigid support projection 55 may also have other shaped cross-sections, for example, a circular cross-section.

The support projection 55 is mounted on the support recess 5143 on the bottom surface 5141B of the accommodating recess 514B, and the axial height of the support projection 55 is greater than the depth of the support recess 5143 recessed from the bottom surface 5141B, such that the upper surface of the support projection 55 protrudes beyond the bottom surface 5141B. When the thrust plate 53 is mounted in place on the support seat 51B, the thrust plate 53 is supported in the accommodating recess 514B through the support projection 55, and a part, located radially outside the support projection 55, of the thrust plate 53 is suspended. An axial clearance exists between the suspended part of the thrust plate 53 and the bottom surface 5141B of the accommodating recess 514B facing the suspended part. When the suspended part of the thrust plate 53 is subjected to a downward force on one side, the thrust plate 53 is tilted in a certain degrees under the force.

The rotary shaft support assembly 50B according to the third embodiment of the present application is capable of achieving the advantageous technical effects similar to those described above for the rotary shaft support assembly 50 and the rotary shaft support assembly 50A.

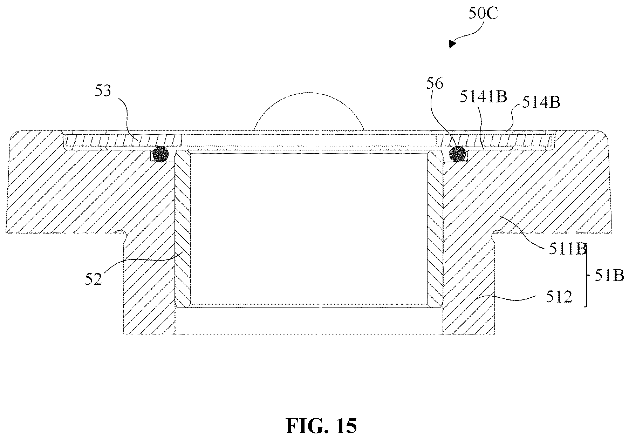

Fig. 15 shows a rotary shaft support assembly 50C of a compressor according to a fourth embodiment of the present application. The construction of the compressor according to the fourth embodiment of the present application is substantially the same as the construction of the compressor according to the third embodiment of the present application, and the difference only lies in the form of the support projection in the rotary shaft support assembly. In the accompanying drawings, parts identical to those in the rotary shaft support assembly 50B are indicated by the same reference numerals and are not described repeatedly. Only the differences between the rotary shaft support assembly 50C and the rotary shaft support assembly 50B according to the present application are described hereinafter.

The rotary shaft support assembly 50C includes a support seat 51B, a thrust plate 53, and a support projection 56. The difference between the rotary shaft support assembly 50C and the rotary shaft support assembly 50B only lies in that the support projection 56 is a support ring having elasticity. In the example shown in the figures, the support projection 56 is an O-ring having a circular cross-section. However, the present application is not limited thereto. In other examples according to the present application, the support projection 56 having elasticity may have other shaped cross-sections, for example, a rectangle cross-section.

When the thrust plate 53 is mounted in place on the support seat 51B, the support projection 56 is mounted on the support recess 5143 on a bottom surface 5141B of an accommodating recess 514B of the support seat 51B, and the thrust plate 53 is supported in the accommodating recess 514B of the support seat 51B through the support projection 56. A part, located radially outside of the support projection 56, of the thrust plate 53 is suspended. An axial clearance exists between the suspended part of the thrust plate 53 and the bottom surface 5141B facing the suspended part. Therefore, when a downward force acts on one side of the suspended part of the thrust plate 53, the thrust plate 53 is tilted in a certain degrees under the force.

The rotary shaft support assembly 50C according to the fourth embodiment of the present application is capable of achieving the advantageous technical effects similar to those described above for the rotary shaft support assembly 50, the rotary shaft support assembly 50A, and the rotary shaft support assembly 50B.

The compressor 1 and the rotary shaft support assembly thereof according to the preferred embodiments of the present application are illustrated above.

In the preferred embodiment illustrated above, in order to prevent the thrust plate from falling off from the support seat during assembly, the anti-release member is implemented as an anti-release member 54 having a large head portion 541. However, the present application is not limited thereto, and the anti-release member may be implemented in other suitable forms in other examples according to the present application.

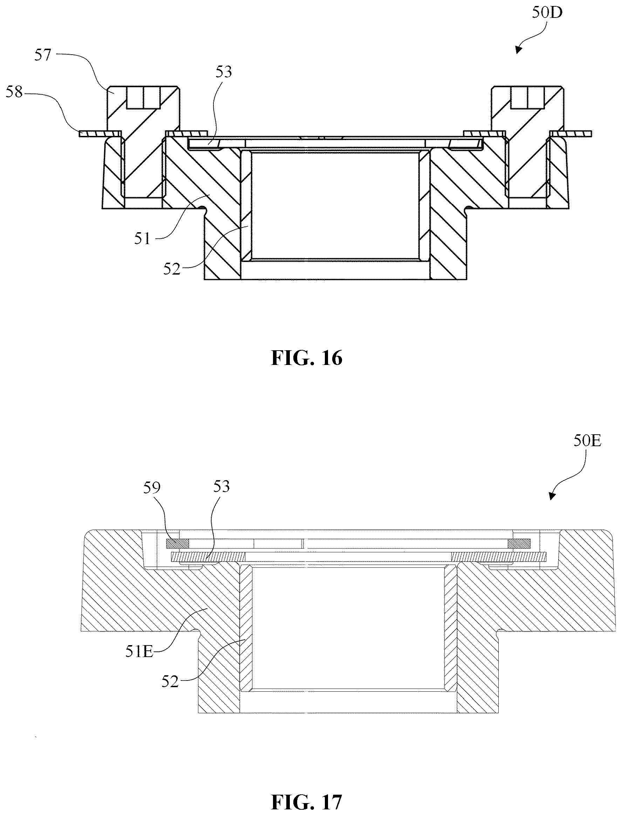

Fig. 16 shows a cross-sectional view of a rotary shaft support assembly 50D of a compressor according to a modified example of the present application. The rotary shaft support assembly 50D has the construction substantially same as that of the rotary shaft support assembly 50, and differs only in the construction of the anti-release member.

As shown in Fig. 16, the anti-release member of the rotary shaft support assembly 50D includes a screw 57 and a spacer 58. The screw 57 is screwed into a flange 511 of the support seat 51, the spacer 58 is sandwiched between a head of the screw 57 and an upper surface of the flange 511, and a part of the spacer 58 is located directly above the thrust plate 53 and axially spaced apart from the thrust plate 53. An axial clearance exists between the spacer 58 and the upper surface of the thrust plate 53. Such an anti-release member including the screw 57 and the spacer 58 can achieve an effect similar to that of the anti-release member 54, preventing the thrust plate 53 from falling off from the support seat 51, and the thrust plate 53 is still allowed to move axially within a certain range relative to the support seat 51.

Fig. 17 shows a cross-sectional view of a rotary shaft support assembly 50E of a compressor according to another modified example of the present application. The rotary shaft support assembly 50E has essentially the same construction as the rotary shaft support assembly 50, and differs only in the construction of the anti-release member. The anti-release member of the rotary shaft support assembly 50E includes an anti-release ring 59.

As shown in Fig. 17, the anti-release ring 59 is mounted in the support seat 51E, and a part of the anti-release ring 59 is located directly above the thrust plate 53 and axially spaced apart from the thrust plate 53. An axial clearance exists between the anti-release ring 59 and an upper surface of the thrust plate 53. The anti-release ring 59 prevents the thrust plate 53 from falling off the support seat 51E, and the thrust plate 53 is still allowed to move axially within a certain range relative to the support seat 51E.

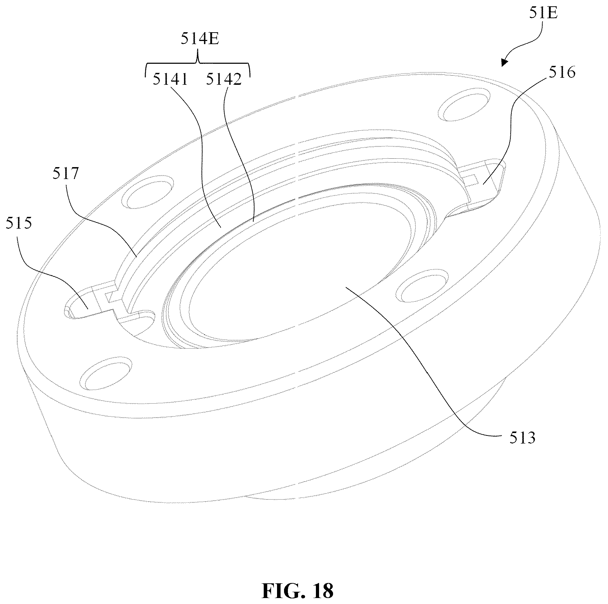

Fig. 18 shows a three-dimensional view of the support seat 51E. The support seat 51E has the construction substantially same as that of the support seat 51 of the rotary shaft support assembly 50, and differs only in that a mounting slot 517 is provided on a circumferential side wall of an accommodating recess 514E of the support seat 51E for mounting the anti-release ring 59.

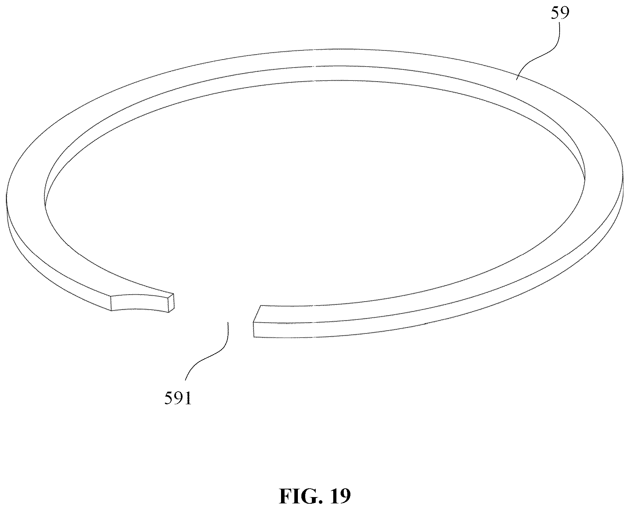

Fig. 19 shows a three-dimensional view of the anti-release ring 59. The anti-release ring 59 is provided with an opening portion 591 such that the diameter of the anti-release ring 59 can be reduced when the anti-release ring 59 is squeezed along the radial direction, so as to facilitate mounting of the anti-release ring 59 in the mounting slot 517 of the accommodating recess 514 of the support seat 51E.

The exemplary embodiments of the compressor and the rotary shaft support assembly thereof according to the present application have been described in detail herein, but it should be understood that the present application is not limited to the specific embodiments described and illustrated in detail above. The exemplary embodiments described above may be combined in any way according to needs. For example, the support seat 51 of the rotary shaft support assembly 50 according to the first embodiment described above may be used in combination with the thrust plate 53A of the rotary shaft support assembly 50A according to the second embodiment described above to form another rotary shaft support assembly. Moreover, without departing from the scope of the present application, various modifications and variations to the present application can be made by those skilled in the art that fall within the scope of the invention as defined by the appended claims.

## Claims

1. A rotary shaft support assembly (50, 50A, 50B, 50C, 50D, 50E), comprising:
a support seat (51, 51A, 51B, 51E), which is provided with an orifice (513); and
a thrust plate (53, 53A), which is supported on the support seat (51, 51A, 51B, 51E) so that a through-hole (531) of the thrust plate (53, 53A) is axially aligned with the orifice (513) of the support seat (51, 51A, 51B, 51E),
**characterized in that** the thrust plate is floatable in an axial direction relative to the support seat (51, 51A, 51B, 51E);
wherein the thrust plate (53, 53A) is supported in an accommodating region of the support seat (51, 51A, 51B, 51E) through a support projection (5142, 534, 55, 56), so that a part, located radially outside the support projection (5142, 534, 55, 56), of the thrust plate (53, 53A) is suspended.

2. The rotary shaft support assembly (50, 50D, 50E) according to claim 1, wherein the support projection (5142) is integrally formed on an axial end surface of the accommodating region.

3. The rotary shaft support assembly (50A, 50D, 50E) according to claim 1, wherein the support projection (534) is integrally formed on the thrust plate (53A).

4. The rotary shaft support assembly (50B, 50C) according to claim 1, wherein a support recess (5143) is formed in the accommodating region, and the support recess (5143) is recessed in an axial direction from an axial end surface of the accommodating region,
wherein the support projection (55, 56) is a support ring, and the support ring is mounted in the support recess (5143).

5. The rotary shaft support assembly (50, 50A, 50B, 50C, 50D, 50E) according to any one of claims 1 to 4, wherein the rotary shaft support assembly (50, 50A, 50B, 50C, 50D, 50E) further comprises a bearing (52), the orifice (513) of the support seat (51, 51A, 51B, 51E) is a through-hole, and the bearing (52) is mounted in the through-hole of the support seat (51, 51A, 51B, 51E).

6. The rotary shaft support assembly (50, 50A, 50B, 50C, 50D, 50E) according to any one of claims 1 to 4, wherein the rotary shaft support assembly (50, 50A, 50B, 50C, 50D, 50E) further comprises an anti-release member, and the anti-release member is mounted on the support seat (51, 51A, 51B, 51E), so that a part of the anti-release member is located directly above the thrust plate (53, 53A) and axially spaced apart from the thrust plate (53, 53A).

7. The rotary shaft support assembly (50, 50A, 50B, 50C) according to claim 6, wherein the anti-release member (54) comprises a head portion (541) and a rod portion (542) formed integrally, and the rod portion (542) is detachably mounted to the support seat (50, 50A, 50B, 50C), so that a part of the head portion (541) is located directly above the thrust plate (53, 53A) and axially spaced apart from the thrust plate (53, 53A).

8. The rotary shaft support assembly (50D) according to claim 6, wherein the anti-release member comprises a screw (57) and a spacer (58), the screw (57) is screwed to the support seat (51), the spacer (57) is sandwiched between a head of the screw (57) and the support seat (51), and wherein a part of the spacer (58) is located directly above the thrust plate (53) and axially spaced apart from the thrust plate (53).

9. The rotary shaft support assembly (50E) according to claim 6, wherein the accommodating region is an accommodating recess (514E) recessed relative to an axial end surface of the support seat (51E), and a mounting slot (517) is formed on a circumferential sidewall of the accommodating recess (514E),
wherein the anti-release member comprises an anti-release ring (59), and the anti-release ring (59) is detachably mounted to the mounting slot (517), so that a part of the anti-release ring (59) is located directly above the thrust plate (53) and axially spaced apart from the thrust plate (53).

10. The rotary shaft support assembly (50, 50A, 50B, 50C, 50D, 50E) according to any one of claims 1 to4, wherein the thrust plate (53, 53A) is elastically deformable relative to the support seat (51, 51A, 51B, 51E).

11. A compressor (1), comprising:
a compression mechanism (20), comprising a non-orbiting scroll (21) and an orbiting scroll (22); and
a drive mechanism (30), wherein a rotating shaft (33) of the drive mechanism (30) is configured to drive the orbiting scroll (22),
**characterized in that** the compressor (1) further comprises the rotary shaft support assembly (50, 50A, 50B, 50C, 50D, 50E) according to any one of claims 1 to 10,
wherein a shoulder (331) at a lower end of the rotary shaft (33) is supported on the thrust plate (53, 53A) of the rotary shaft support assembly (50, 50A, 50B, 50C, 50D, 50E), and a radial outer edge of a region in which the shoulder (331) contacts with the thrust plate (53, 53A) is located radially outside the support projection (5142, 534, 55, 56).

## Patentansprüche

1. Drehwellenstützanordnung (50, 50A, 50B, 50C, 50D, 50E), umfassend:
einen Stützsitz (51, 51 A, 51B, 51E), der mit einer Öffnung (513) versehen ist; und
eine Druckplatte (53, 53A), die auf dem Stützsitz (51, 51A, 51B, 51E) abgestützt ist, sodass ein Durchgangsloch (531) der Druckplatte (53, 53A) axial mit der Öffnung (513) des Stützsitzes (51, 51A, 51B, 51E) ausgerichtet ist,
**dadurch gekennzeichnet, dass** die Druckplatte in einer axialen Richtung relativ zu dem Stützsitz (51, 51A, 51B, 51E) beweglich ist;
wobei die Druckplatte (53, 53A) in einem Aufnahmebereich des Stützsitzes (51, 51A, 51B, 51E) durch einen Stützvorsprung (5142, 534, 55, 56) gestützt wird, sodass ein radial außerhalb des Stützvorsprungs (5142, 534, 55, 56) angeordneter Teil der Druckplatte (53, 53A) überhängend ist.

2. Drehwellenstützanordnung (50, 50D, 50E) nach Anspruch 1, wobei der Stützvorsprung (5142) integral an einer axialen Endfläche des Aufnahmebereichs ausgebildet ist.

3. Drehwellenstützanordnung (50A, 50D, 50E) nach Anspruch 1, wobei der Stützvorsprung (534) integral an der Druckplatte (53A) ausgebildet ist.

4. Drehwellenstützanordnung (50B, 50C) nach Anspruch 1, wobei eine Stützausnehmung (5143) in dem Aufnahmebereich gebildet ist und die Stützausnehmung (5143) in einer axialen Richtung von einer axialen Endfläche des Aufnahmebereichs vertieft ist,
wobei der Stützvorsprung (55, 56) ein Stützring ist und der Stützring in der Stützausnehmung (5143) befestigt ist.

5. Drehwellenstützanordnung (50, 50A, 50B, 50C, 50D, 50E) nach einem der Ansprüche 1 bis 4, wobei die Drehwellenstützanordnung (50, 50A, 50B, 50C, 50D, 50E) ferner ein Lager (52) umfasst, die Öffnung (513) des Stützsitzes (51, 51A, 51B, 51E) ein Durchgangsloch ist und das Lager (52) im Durchgangsloch des Stützsitzes (51, 51A, 51B, 51E) befestigt ist.

6. Drehwellenstützanordnung (50, 50A, 50B, 50C, 50D, 50E) nach einem der Ansprüche 1 bis 4, wobei die Drehwellenstützanordnung (50, 50A, 50B, 50C, 50D, 50E) ferner ein Entriegelungsschutzelement umfasst und das Entriegelungsschutzelement an dem Stützsitz (51, 51A, 51B, 51E) befestigt ist, sodass ein Teil des Entriegelungsschutzelements direkt über der Druckplatte (53, 53A) und axial beabstandet von der Druckplatte (53, 53A) angeordnet ist.

7. Drehwellenstützanordnung (50, 50A, 50B, 50C) nach Anspruch 6, wobei das Entriegelungsschutzelement (54) einen Kopfabschnitt (541) und einen Stangenabschnitt (542) umfasst, die integral ausgebildet sind, und der Stangenabschnitt (542) lösbar an dem Stützsitz (50 53, 50A, 50B, 50C) befestigt ist, sodass ein Teil des Kopfabschnitts (541) direkt über der Druckplatte (53, 53A) und axial beabstandet von der Druckplatte (53A) angeordnet ist.

8. Drehwellenstützanordnung (50D) nach Anspruch 6, wobei das Entriegelungsschutzelement eine Schraube (57) und einen Abstandshalter (58) umfasst, die Schraube (57) an den Stützsitz (51) geschraubt ist, der Abstandshalter (57) zwischen einem Kopf der Schraube (57) und dem Stützsitz (51) sandwichartig angeordnet ist und wobei ein Teil des Abstandshalters (58) direkt über der Druckplatte (53) und axial beabstandet von der Druckplatte (53) angeordnet ist.

9. Drehwellenstützanordnung (50E) nach Anspruch 6, wobei der Aufnahmebereich eine Aufnahmeausnehmung (514E) ist, die relativ zu einer axialen Endfläche des Stützsitzes (51E) vertieft ist, und ein Befestigungsschlitz (517) an einer Umfangsseitenwand der Aufnahmeausnehmung (514E) gebildet ist,
wobei das Entriegelungsschutzelement einen Entriegelungsschutzring (59) umfasst und der Entriegelungsschutzring (59) lösbar an dem Befestigungsschlitz (517) befestigt ist, sodass ein Teil des Entriegelungsschutzrings (59) direkt über der Druckplatte (53) und axial beabstandet von der Druckplatte (53) angeordnet ist.

10. Drehwellenstützanordnung (50, 50A, 50B, 50C, 50D, 50E) nach einem der Ansprüche 1 bis 4, wobei die Druckplatte (53, 53A) relativ zu dem Stützsitz (51, 51A, 51B, 51E) elastisch verformbar ist.

11. Spiralverdichter (1), umfassend:
einen Kompressionsmechanismus (20), der eine nicht umlaufende Spirale (21) und eine umlaufende Spirale (22) umfasst; und
einen Antriebsmechanismus (30), wobei eine Drehwelle (33) des Antriebsmechanismus (30) dazu ausgelegt ist, die umlaufende Spirale (22) anzutreiben,
**dadurch gekennzeichnet, dass** der Verdichter (1) ferner die Drehwellenstützanordnung (50, 50A, 50B, 50C, 50D, 50E) nach einem der Ansprüche 1 bis 10 umfasst,
wobei ein Absatz (331) an einem unteren Ende der Drehwelle (33) auf der Druckplatte (53, 53A) der Drehwellenstützanordnung (50, 50A, 50B, 50C, 50D, 50E) angeordnet ist und eine radiale Außenkante eines Bereichs, in dem der Absatz (331) mit der Druckplatte (53, 53A) in Kontakt steht, radial außerhalb des Stützvorsprungs (5142, 534, 55, 56) angeordnet ist.

## Revendications

1. Ensemble de support d'arbre rotatif (50, 50A, 50B, 50C, 50D, 50E), comportant :
un siège de support (51, 51A, 51B, 51E), qui est muni d'un orifice (513) ; et
une plaque de poussée (53, 53A), qui est supportée sur le siège de support (51, 51A, 51B, 51E) de manière à ce qu'un trou traversant (531) de la plaque de poussée (53, 53A) soit aligné axialement avec l'orifice (513) du siège de support (51, 51A, 51B, 51E),
**caractérisé en ce que** la plaque de poussée est flottante dans une direction axiale par rapport au siège de support (51, 51A, 51B, 51E) ;
la plaque de poussée (53, 53A) étant supportée dans une région formant logement du siège de support (51, 51A, 51B, 51E) par l'intermédiaire d'une saillie de support (5142, 534, 55, 56), de sorte qu'une partie de la plaque de poussée (53, 53A) située radialement à l'extérieur de la saillie de support (5142, 534, 55, 56) soit suspendue.

2. Ensemble de support d'arbre rotatif (50, 50D, 50E) selon la revendication 1, dans lequel la saillie de support (5142) est formée, de façon à faire partie intégrante de celle-ci, sur une surface d'extrémité axiale de la région formant logement.

3. Ensemble de support d'arbre rotatif (50A, 50D, 50E) selon la revendication 1, dans lequel la saillie de support (534) est formée, de façon à faire partie intégrante de celle-ci, sur la plaque de poussée (53A).

4. Ensemble de support d'arbre rotatif (50B, 50C) selon la revendication 1, dans lequel un renfoncement de support (5143) est formé dans la région formant logement, et le renfoncement de support (5143) est défini dans une direction axiale à partir d'une surface d'extrémité axiale de la région formant logement,
dans lequel la saillie de support (55, 56) est un anneau de support, et l'anneau de support est monté dans le renfoncement de support (5143).

5. Ensemble de support d'arbre rotatif (50, 50A, 50B, 50C, 50D, 50E) selon l'une quelconque des revendications 1 à 4, l'ensemble de support d'arbre rotatif (50, 50A, 50B, 50C, 50D, 50E) comprenant en outre un palier (52), l'orifice (513) du siège de support (51, 51A, 51B, 51E) étant un trou traversant, et le palier (52) étant monté dans le trou traversant du siège de support (51, 51A, 51B, 51E).

6. Ensemble de support d'arbre rotatif (50, 50A, 50B, 50C, 50D, 50E) selon l'une quelconque des revendications 1 à 4, l'ensemble de support d'arbre rotatif (50, 50A, 50B, 50C, 50D, 50E) comprenant en outre un élément de retenue, et l'élément de retenue étant monté sur le siège de support (51, 51A, 51B, 51E), de sorte qu'une partie de l'élément de retenue soit située directement au-dessus de la plaque de poussée (53, 53A) et espacée axialement de la plaque de poussée (53, 53A).

7. Ensemble de support d'arbre rotatif (50, 50A, 50B, 50C) selon la revendication 6, dans lequel l'élément de retenue (54) comprend une partie tête (541) et une partie tige (542) formées d'un seul tenant, et la partie tige (542) est montée de manière détachable sur le siège de support (50, 50A, 50B, 50C), de sorte qu'une partie de la partie tête (541) soit située directement au-dessus de la plaque de poussée (53, 53A) et espacée axialement de la plaque de poussée (53, 53A).

8. Ensemble de support d'arbre rotatif (50D) selon la revendication 6, dans lequel l'élément de retenue comprend une vis (57) et une entretoise (58), la vis (57) est vissée sur le siège de support (51), l'entretoise (57) est prise en sandwich entre une tête de la vis (57) et le siège de support (51), et dans lequel une partie de l'entretoise (58) est située directement au-dessus de la plaque de poussée (53) et espacée axialement de la plaque de poussée (53).

9. Ensemble de support d'arbre rotatif (50E) selon la revendication 6, dans lequel la région formant logement est un renfoncement formant logement (514E) en renfoncement par rapport à une surface d'extrémité axiale du siège de support (51E), et une fente de montage (517) est formée sur une paroi latérale circonférentielle du renfoncement formant logement (514E),
dans lequel l'élément de retenue comprend une bague de retenue (59), et la bague de retenue (59) est montée amovible dans la fente de montage (517), de sorte qu'une partie de la bague de retenue (59) soit située directement au-dessus de la plaque de poussée (53) et espacée axialement de la plaque de poussée (53).

10. Ensemble de support d'arbre rotatif (50, 50A, 50B, 50C, 50D, 50E) selon l'une quelconque des revendications 1 à 4, dans lequel la plaque de poussée (53, 53A) est déformable élastiquement par rapport au siège de support (51, 51A, 51B, 51E).

11. Compresseur (1), comprenant :
un mécanisme de compression (20) comprenant une spirale non orbitale (21) et une spirale orbitale (22) ; et
un mécanisme d'entraînement (30), un arbre rotatif (33) du mécanisme d'entraînement (30) étant configuré pour entraîner la spirale orbitale (22),
**caractérisé en ce que** le compresseur (1) comprend en outre l'ensemble de support d'arbre rotatif (50, 50A, 50B, 50C, 50D, 50E) selon l'une quelconque des revendications 1 à 10,
un épaulement (331) à une extrémité inférieure de l'arbre rotatif (33) étant supporté sur la plaque de poussée (53, 53A) de l'ensemble de support d'arbre rotatif (50, 50A, 50B, 50C, 50D, 50E), et un bord extérieur radial d'une région dans laquelle l'épaulement (331) entre en contact avec la plaque de poussée (53, 53A) étant situé radialement à l'extérieur de la saillie de support (5142, 534, 55, 56).
